# EUROPEAN PATENT SPECIFICATION

(11) **EP 2 196 967 B1**
(45) Date of publication and mention of the grant of the patent: **26.10.2011**
(21) Application number: 09175452.3
(22) Date of filing: 09.11.2009
(51) Int. Cl.: G08B 13/196, H04N 7/18

(54) **Methods and apparatus for adaptively streaming video data based on a triggering event**
Verfahren und Vorrichtung zum adaptiven Streaming von Videodaten basierend auf einem Auslöserereignis
Procédés et appareil pour la diffusion adaptative de données vidéo d'après un évènement déclencheur

(30) Priority: 11.11.2008 US 268933
(43) Date of publication of application: 16.06.2010
(73) Proprietor: Honeywell International, Inc., Morristown NJ 07962 (US)
(72) Inventor: Dorneich, Michael Christian, Morristown, NJ 07962-2245 (US); Whitlow, Stephen, Morristown, NJ 07962-2245 (US); Feigh, Karen, Morristown, NJ 07962-2245 (US)
(74) Representative: Buckley, Guy Julian

(56) References cited:
- EP-A2- 1 480 178
- US-A1- 2007 159 529

## Description

### TECHNICAL FIELD

The subject matter described herein relates generally to video surveillance applications, and more particularly, embodiments of the subject matter relate to methods and apparatus for adaptively streaming surveillance video data in response to identifying a triggering event.

### BACKGROUND

Unmanned aerial vehicles are currently used in a number of military and civilian applications. One common application involves using the unmanned aerial vehicle for video surveillance of a particular object or area of interest. Generally, an operator reviews streaming video captured by the unmanned aerial vehicle remotely using a ground control station. The operator attempts to glean useful intelligence information by analyzing and interpreting the streaming video. Often, the operator manipulates the streaming video in order to thoroughly analyze the captured video, for example, by zooming in on a particular region or slowing down, pausing, or rewinding the video stream. As a result, the operator is often reviewing buffered or past content, rather than real-time streaming video. Thus, if the operator is reviewing the buffered video, the operator may be unaware of important realtime events that may require immediate action. In this situation, the operator will not initiate any action on the important event until the operator reaches the time for the event in the buffered video. In addition, the operator has to manually identify, analyze, and characterize the event, which further delays the response to the event.
EP 1 480 178 discloses a security system comprising a plurality of surveillance notes each surveillance note providing a video source of a scene of a location.

### BRIEF SUMMARY

The present invention in its various aspects is as set out in the appended claims. A method is provided for displaying streaming video on a display device of a control unit associated with a surveillance module. A method comprises buffering a video data stream captured by the surveillance module to obtain a buffered video data stream and displaying a first segment of the buffered video data stream in a viewing area on the display device. The first segment corresponds to content captured at a first time in the past. The method continues by receiving a notification signal that is indicative of a real time triggering event occurring at a second time and in response to the notification signal, displaying a second segment of the buffered video data stream in the viewing area, the second segment correspending to content captured at around the second time.

In another embodiment, an apparatus is provided for a control unit for use with a surveillance module adapted to capture a video data stream. The control unit comprises a display device, a communication module adapted to receive the video data stream, and a processor coupled to the display device and the communication module. The processor is configured to buffer the video data stream to obtain a buffered video data stream and display a first segment of the buffered video data stream on the display device, wherein the first segment corresponds to content captured at a first time in the past. The processor is further configured to identify a real time triggering event occurring at a second time and display a second segment of the buffered video data stream on the display device in response to the triggering event, wherein the second segment corresponds to content captured at around the second time.

### BRIEF DESCRIPTION OF THE DRAWINGS

Embodiments of the subject matter will hereinafter be described in conjunction with the following drawing figures, wherein like numerals denote like elements, and

FIG. 1 is a block diagram of an unmanned aerial vehicle in accordance with one embodiment;

FIG. 2 is a block diagram of an exemplary control unit suitable for use with the unmanned aerial vehicle of FIG. 1;

FIG. 3 a flow diagram of adaptive video streaming process suitable for use with the control unit of FIG. 2 in accordance with one embodiment;

FIG. 4 is a schematic view of a first segment of a buffered video data stream suitable for use with the adaptive video streaming process of FIG. 3; and

FIG. 5 is a schematic view of a second segment of a buffered video data stream suitable for use with the adaptive video streaming process of FIG. 3.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description.

Techniques and technologies may be described herein in terms of functional and/or logical block components, and with reference to symbolic representations of operations, processing tasks, and functions that may be performed by various computing components or devices. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

For the sake of brevity, conventional techniques related to graphics and image processing, video processing, data streaming and/or data transfer, video surveillance systems, unmanned vehicle controls, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Technologies and concepts discussed herein relate generally to aerial vehicle-based video surveillance applications. Although the subject matter may be described herein in the context of an unmanned aerial vehicle, various aspects of the subject matter may be implemented in other surveillance applications (e.g., non-vehicle-based applications) or with other unmanned vehicles, for example, unmanned ground vehicles or unmanned underwater vehicles, or any other surveillance vehicle (manned or unmanned) that is capable of autonomous operation (e.g., equipped with autopilot or a comparable feature), and the subject matter is not intended to be limited to use with any particular vehicle. As described below, in an exemplary embodiment, in response to a real-time triggering event, the video display is updated to show a surveillance video data stream substantially in real-time and the triggering event is identified on the display. The user may then quickly ascertain the nature of the triggering event and proceed in an appropriate manner, or otherwise ignore the triggering event and return the previous view. As a result, the user may review and analyze a surveillance video data stream without being concerned with potentially missing an important real-time event.

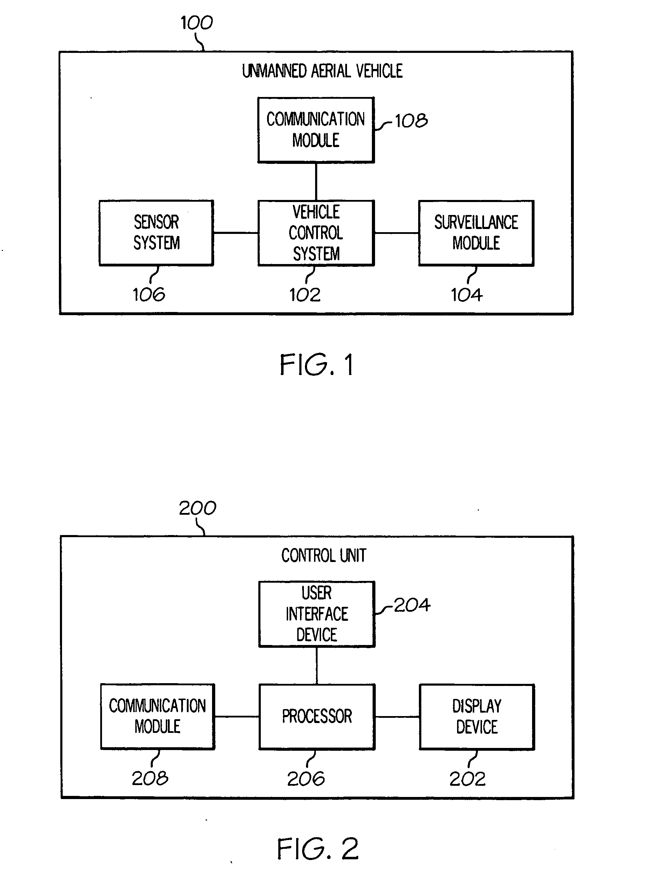

F1G. 1 depicts an exemplary embodiment of an unmanned aerial vehicle 100. In an exemplary embodiment, the unmanned aerial vehicle 100 is a micro air vehicle (MAV) capable of operation in accordance with a predetermined flight plan obtained and/or downloaded from an associated ground control station, as described below. The unmanned aerial vehicle 100 may include, without limitation, a vehicle control system 102, a surveillance module 104, a sensor system 106, and a communication module 108. It should be understood that FIG. 1 is a simplified representation of an unmanned aerial vehicle 100 for purposes of explanation and ease of description, and FIG. 1 is not intended to limit the application or scope of the subject matter in any way. In practice, the unmanned aerial vehicle 100 may include numerous other devices and components for providing additional functions and features, as will be appreciated in the art.

In an exemplary embodiment, the vehicle control system 102 is coupled to the surveillance module 104, the sensor system 106, and the communication module 108. The vehicle control system 102 generally represents the hardware, software, firmware, processing logic, and/or other components of the unmanned aerial vehicle 100 that enable the unmanned aerial vehicle 100 to achieve unmanned operation and/or flight based upon a predetermined flight plan in order to achieve video and/or other surveillance of a desired surveillance target, as will be appreciated in the art and described in greater detail below. In this regard, although not illustrated, the vehicle control system 102 may be coupled to and/or include a navigation system suitably configured to support unmanned flight and/or operation of the unmanned acrial vehicle 100. Depending on the embodiment, the navigation system may be realized as a global positioning system (GPS), inertial reference system (IRS), or a radio-based navigation system (e.g., VHF omni-directional radio range (VOR) or long range aid to navigation (LORAN)), or another suitable navigation system, and the navigation system may include one or more sensors suitably configured to support operation of the navigation system, as will be appreciated in the art.

In an exemplary embodiment, the unmanned aerial vehicle 100 operates in conjunction with an associated ground control station or control unit, as described in greater detail below. In this regard, the unmanned aerial vehicle 100 and the associated ground control station are preferably configured to support bi-directional peer-to-peer communication. The communication module 108 generally represents the hardware, software, firmware, processing logic, and/or other components that enable bi-directional communication between the unmanned aerial vehicle 100 and the associated ground control station or control unit, as will be appreciated in the art. In this regard, the communication module 108 may support one or more wireless data communication protocols. Any number of suitable wireless data communication protocols, techniques, or methodologies may be supported by the communication module 108, as will be appreciated in the art. In addition, the communication module 108 may include a physical interface to enable a direct physical communication medium between the unmanned aerial vehicle 100 and the associated ground control station.

In an exemplary embodiment, the surveillance module 104 is realized as at least one camera adapted to capture surveillance data (e.g., images and/or video of) for a viewing region proximate the unmanned aerial vehicle 100 during operation. In this regard, the camera may be realized as a video camera, an infrared camera, a radar-based imaging device, a multi-spectral imaging device, or another suitable imaging camera or device. For example, in accordance with one embodiment, the surveillance module 104 comprises a first video camera that is positioned and/or angled downward (e.g., the camera lens is directed beneath the unmanned aerial vehicle) and a second video camera positioned and/or angled such that the lens points outward from the unmanned aerial vehicle 100 aligned with the horizontal line of travel (e.g., the camera lens is directed straight out or forward). In an exemplary embodiment, the vehicle control system 102 and the communication module 108 are cooperatively configured to allow the transferring and/or uploading of surveillance data (e.g., video data or photographic data) from the surveillance module 104 to the ground control station, as will be appreciated in the art.

In an exemplary embodiment, a sensor system 106 is configured to sense or otherwise obtain information pertaining to the operating environment proximate the unmanned aerial vehicle 100 during operation of the unmanned aerial vehicle 100. It will be appreciated that although FIG. 1 shows a single sensor system 106, in practice, additional sensor systems may be present. In various embodiments, the sensor system 106 may include one or more of the following: motion sensors, infrared sensors, temperature or thermal sensors, photosensors or photodetectors, audio sensors or sound sensors, an obstacle detection system, and/or another suitable sensing system. These and other possible combinations of sensors may be cooperatively configured to support operation of the unmanned aerial vehicle 100 as described in greater detail below. In accordance with one or more embodiments, the unmanned aerial vehicle 100 and/or vehicle control system 102 is suitably configured to identity, detect, or otherwise process a triggering event based on data and/or information obtained via sensor system 106, as described below.

FIG. 2 depicts an exemplary embodiment of a control unit 200 suitable for operation with the unmanned aerial vehicle 100. The control unit 200 may include, without limitation, a display device 202, a user interface device 204, a processor 206, and a communication module 208. In an exemplary embodiment, the control unit 200 is realized as a ground control station, and the control unit 200 is associated with the unmanned aerial vehicle 100 as described above. That is, the communication module 208 is suitably configured for bi-directional communication between the control unit 200 and the unmanned aerial vehicle 100, as described above in the context of FIG. 1. In an exemplary embodiment, the communication module 208 is adapted to receive a video data stream from the unmanned aerial vehicle 100, as described below.

It should be understood that FIG. 2 is a simplified representation of a control unit 200 for purposes of explanation and ease of description, and FIG. 2 is not intended to limit the application or scope of the subject matter in any way. In practice, the control unit 200 may include numerous other devices and components for providing additional functions and features, as will be appreciated in the art. For example, in practice, the control unit 200 may be coupled to and/or include one or more additional modules or components as necessary to support navigation, flight planning, and other conventional unmanned vehicle control functions in a conventional manner.

In an exemplary embodiment, the display device 202 is coupled to the processor 206, which in turn is coupled to the user interface device 204. In an exemplary embodiment, the display device 202, user interface device 204, and processor 206 are cooperatively configured to allow a user review and analyze streaming video comprising surveillance data from the unmanned aerial vehicle 100 on the display device 202, as described below. The processor 206 is coupled to the communication module 208, and the processor 206 and communication module 208 are cooperatively configured to display, render, or otherwise convey a segment or portion of the video data stream downloaded from the unmanned aerial vehicle 100, as described in greater detail below.

In an exemplary embodiment, the display device 202 is realized as an electronic display configured to display a surveillance video data stream obtained from the unmanned aerial vehicle 100 under control of the processor 206. In practice, the display device 202 may also display other information and/or data associated with operation of the unmanned aerial vehicle 100 under control of the processor 206, such as, for example, a navigational map, flight planning information, and the like. Depending on the embodiment, the display device 202 may be realized as a visual display device such as a monitor, display screen, flat panel display, or another suitable electronic display device. In various embodiments, the user interface device 204 may be realized as a keypad, touchpad, keyboard, mouse, touchscreen, stylus, joystick, or another suitable device adapted to receive input from a user. In an exemplary embodiment, the user interface device 204 is adapted to allow a user to manipulate the video data stream rendered and/or displayed on the display device 202, as described below. It should also be appreciated that although FIG. 2 shows a single user interface device 204, in practice, multiple user interface devices may be present.

The processor 206 may be implemented or realized with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this regard, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration. In practice, processor 206 includes processing logic that may be configured to carry out the functions, techniques, and processing tasks associated with the operation of the control unit 200, as described in greater detail below. Furthermore, the steps of a method or algorithm described in connection with the embodiments disclosed herein may be embodied directly in hardware, in firmware, in a software module executed by processor 206, or in any practical combination thereof. In this regard, the processor 206 may access or include a suitable amount of memory configured to support streaming video data on the display device 202, as described below. In this regard, the memory may be realized as RAM memory, flash memory, registers, a hard disk, a removable disk, or any other form of storage medium known in the art.

In some alternative embodiments, although not separately depicted in FIG. 1, the unmanned aerial vehicle 100 may include a processor that is similar to that described above for processor 206. Indeed, some of the operations and functionality (described in more detail below) supported by the control unit 200 may additionally or alternatively be supported by the unmanned aerial vehicle 100, using one or more suitably configured processors, or such operations and functionality may be otherwise supported by the vehicle control system 102.

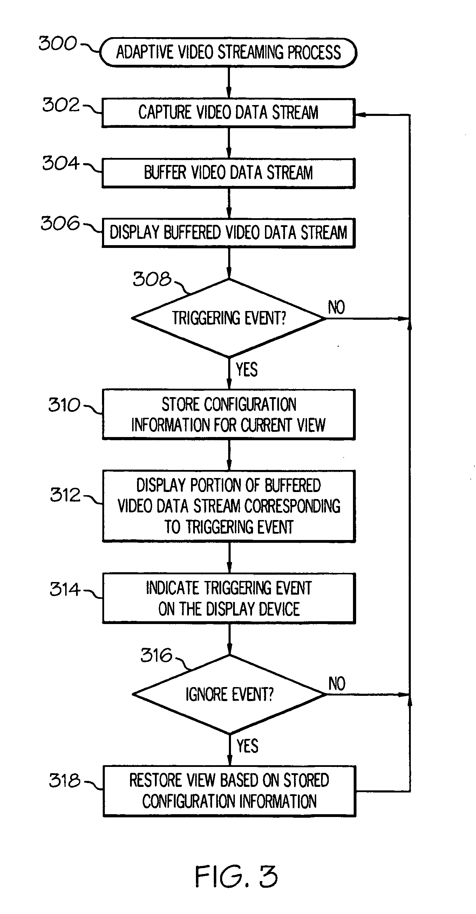

Referring now to FIG. 3, in an exemplary embodiment, an unmanned aerial vehicle 100 and/or a control unit 200 may be configured to perform an adaptive video streaming process 300 and additional tasks, functions, and operations described below. The various tasks may be performed by software, hardware, firmware, or any combination thereof. For illustrative purposes, the following description may refer to elements mentioned above in connection with FIG. 1 and FIG. 2. In practice, the tasks, functions, and operations may be performed by different elements of the described system, such as the surveillance module 104, sensor system 106, the display device 202, the user interface device 204, the processor 206, or the communication module 208. It should be appreciated that any number of additional or alternative tasks may be included, and may be incorporated into a more comprehensive procedure or process having additional functionality not described in detail herein.

Referring again to FIG. 3, and with continued reference to FIG. 1 and FIG. 2, an adaptive video streaming process 300 may be performed to present and/or display a video data stream on a display device 202 of a control unit 200 associated with an unmanned aerial vehicle 100. As described below, in an exemplary embodiment, the adaptive video streaming process 300 is performed in a surveillance context wherein a surveillance video is monitored for certain types of events, conditions, and/or phenomena. In this regard, it should be understood that the subject matter may be similarly utilized in other streaming video applications or with video content other than surveillance video, and the subject matter described herein is not intended to be limited to surveillance applications and/or surveillance video.

In an exemplary embodiment, the adaptive video streaming process 300 may initialize by capturing a video data stream and buffering the video data stream (tasks 302, 304). As used herein, buffering a video data stream should be understood as referring to the process of temporarily storing data as it is received from another device, and may be implemented in either hardware or software, as will be appreciated in the art. In this regard, the processor 206 may buffer a real-time surveillance video data stream captured by the surveillance module 104 and downloaded or otherwise received from the unmanned aerial vehicle 100 via communication module 208 to obtain a buffered video data stream. In this manner, the buffered video data stream may be utilized to hold or maintain the video data stream for display and/or rendering on the display device 202 at a time subsequent to when the video data stream is received by the control unit 200.

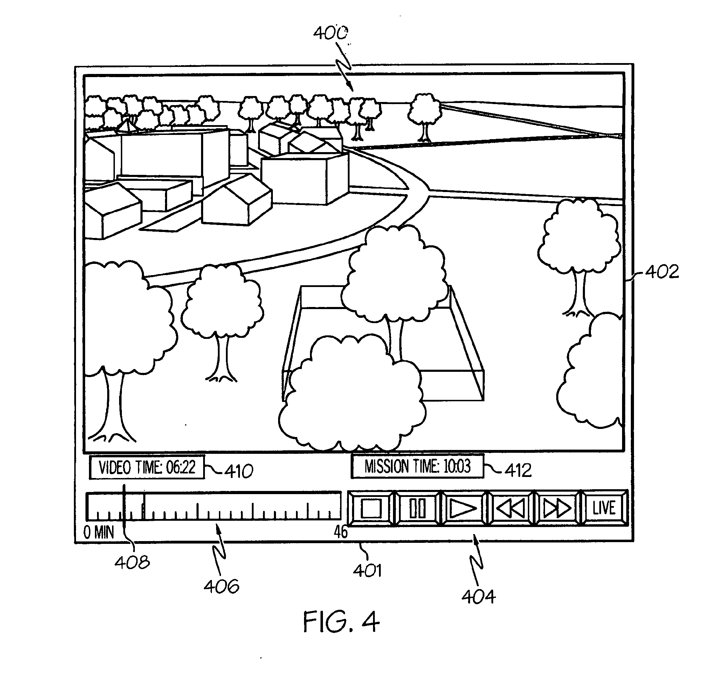

In an exemplary embodiment, the adaptive video streaming process 300 continues by displaying a first segment or portion of the buffered video data stream (task 306). For example, referring to FIG. 4, the adaptive video streaming process 300 may display and/or render a first segment 400 of the buffered video data stream in a viewing area 402 on a display device 401. As shown, the adaptive video streaming process 300 may also be configured to display and/or render graphical tools 404 (e.g., buttons, sliders, objects, or the like) to allow a user to manipulate or otherwise control (e.g., via user interface device 204) the segment or portion of the surveillance video data stream that is displayed on the display device 401 in a conventional manner. In this manner, the user may select or identify, rewind, pause, slow down, or otherwise cause the adaptive video streaming process 300 to display and/or render a segment or portion of the video data stream that does not correspond to the real-time surveillance video data (e.g., the first segment 400 corresponds to a time in the past). In this regard, the adaptive video streaming process 300 may be configured to display and/or render a progress bar 406 with an indicator 408 that shows the relationship between the segment and/or portion of the video data stream Currently displayed on the display device 202 to the current time (or elapsed mission time). As shown, the adaptive video streaming process 300 may also display and/or render a textual representation of the video time 410 along with a textual representation of the current time (or elapsed mission time) 412. In another embodiment, although not illustrated, the adaptive video streaming process 300 may also be configured to display and/or render graphical tools to allow a user to zoom in on particular regions of the video data stream, as will be appreciated in the art.

In an exemplary embodiment, the adaptive video streaming process 300 is performed in a surveillance context where the occurrence of certain types of events, conditions, and/or phenomena is monitored. As used herein, a triggering event or update event should be understood as referring to a real-time event or occurrence in the environment proximate the unmanned aerial vehicle, as described in greater detail below. Depending on the embodiment, the triggering event may be identified in response to receiving a notification signal indicative of a triggering event from the unmanned aerial vehicle, or alternatively the triggering event may be identified using video processing techniques and other suitable methods. Furthermore, depending on the embodiment, the triggering event may be absolutely or relatively determined and/or identified. For example, the triggering event may be statically defined and generated based on an event that satisfies or exceeds an absolute threshold level or an otherwise fixed criterion, as described in greater detail below. Alternatively, the triggering event may be generated and/or determined based on a change in magnitude relative to a value at a previous time (or for a prior video frame) that exceeds a threshold value.

Referring again to FIG. 3, if the adaptive video streaming process 300 does not identify a triggering event or update event, the adaptive video streaming process 300 may continuously buffer the video data stream received from the unmanned aerial vehicle and display a portion and/or segment of the buffered video data stream on the display device as desired (tasks 302, 304, 306, 308). In an exemplary embodiment, if the adaptive video streaming process 300 identifies a triggering event, the adaptive video streaming process 300 continues by storing configuration information for the current view and displaying and/or rendering a second segment or portion of the buffered video data stream that corresponds to the triggering event (tasks 308, 310, 312).

In accordance with one embodiment, the triggering event may correspond to motion of an object that occurs within the viewing region of the camera and/or surveillance module 104. In this regard, the adaptive video streaming process 300 identifies the triggering event by receiving a notification signal from the sensor system 106 onboard unmanned vehicle 100. A motion sensor or motion detector in the sensor system 106 may detect real-time motion of an object, and in response, provide a notification signal to the processor 206. Alternatively, the adaptive video streaming process 300 may utilize video processing techniques to determine, detect, or otherwise identify the motion of an object within the second portion or segment of the video data stream. In accordance with one embodiment, the adaptive video streaming process 300 identifies a triggering event by detecting and/or determining motion (e.g., a speed or velocity) that exceeds a threshold level or otherwise detecting a change (e.g., an acceleration) that exceeds a threshold amount. In this regard, the threshold value for identifying and/or generating a triggering event is established at a sufficiently high value to minimize fals alarms or otherwise identifying less significant events as triggering events. In another embodiment, the triggering event may be an auditory or acoustic event. For example, the adaptive video streaming process 300 may be configured to identify a triggering event by detecting and/or determining a sound pressure level exceeds a threshold level (e.g., a sound pressure level greater than 100 dB) or otherwise detecting a change in sound pressure level that exceeds a threshold amount (e.g., a 20 dB change in sound pressure level) over a brief time interval (e.g., from the previous video frame). In this regard, the audio sensors and/or sound sensors (e.g., sensor system 106) may detect the triggering event and provide a notification signal to the control unit 200, or alternatively, the adaptive video streaming process 300 may be configured to determine and/or detect the triggering event by analyzing audio components of the surveillance video data stream, as will be appreciated in the art. In one embodiment, the adaptive video streaming process 300 displays the threshold settings for the various types of possible triggering events on the display device 202. Similarly, the adaptive video streaming process 300 may be configured to identify a triggering event by detecting and/or determining the presence of light during night. In yet another embodiment, the triggering event may be identified in response to an obstacle detection system detecting an obstacle in the path of the unmanned aerial vehicle 100 and transmitting a notification signal to the control unit 200. It should be appreciated in the art that there are numerous possible triggering events and/or update events, and the subject matter described herein is not limited to any particular triggering event.

As noted above, in an exemplary embodiment, the adaptive video streaming process 300 stores configuration information for the current view in response to identifying a triggering event (tasks 310). As used herein, configuration information should be understood as referring to one or more parameters that define the status or settings associated with the video displayed in a viewing area, such as, for example, a timestamp, viewing angle, playback speed, and other video settings (e.g., brightness, contrast, filters that may be applied). For example, the processor 206 may store configuration information associated with the current viewing area 402 when the triggering event is identified. In this regard, the stored configuration may include a timestamp with the current view shown in the viewing area 402 (e.g., the video time), along with possibly other configuration information for the current view in the viewing area 402, such as, for example, the video resolution or size, a zoom factor or ratio, a viewing angle, and the like.

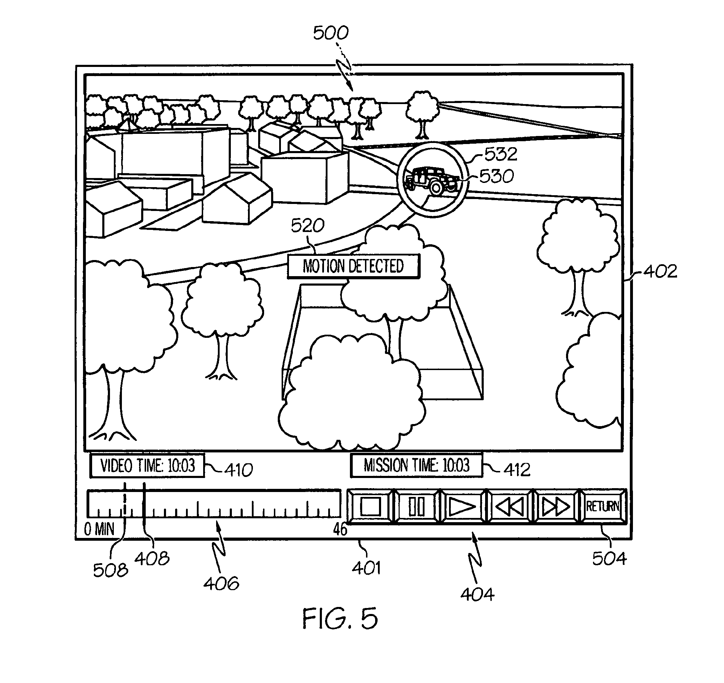

In an exemplary embodiment, the adaptive video streaming process 300 continues by displaying and/or rendering a second segment or portion of the buffered video data stream that corresponds to the triggering event (task 312). For example, referring to FIG. 4 and FIG. 5, the adaptive video streaming process 300 may display and/or render a second segment 500 of the buffered video data stream that corresponds to the triggering in the viewing area 402 on the display device 401. In the exemplary case shown, the second segment 500 or portion of the buffered video data stream corresponds to substantially real-time content captured at or around the time when the triggering event was identified (e.g., the current time or elapsed mission time from FIG. 4). As shown, the adaptive video streaming process 300 may be configured to update the progress bar 406 such that the indicator 408 shows the relationship of the second segment 500 of the video data stream currently displayed on the display device 401 relative to the elapsed mission time. The adaptive video streaming process 300 may also render and/or display a second indicator 508 on the progress bar 406 that represents the timestamp of the segment or portion (e.g., first segment 400) that was previously displayed in the viewing area 402. The adaptive video streaming process 300 may also update the textual representation of the video time 410 to accurately reflect and/or identify the time associated with the segment 500 of the buffered video data stream currently displayed in the viewing area 402.

In accordance with one embodiment, the adaptive video streaming process 300 is configured to display the second segment 500 of the buffered video data stream in the viewing area 402 by fast-forwarding through the buffered video data stream from the time associated with the first segment 400 (e.g., the video time from FIG. 4) to a second time around the time of the triggering event. In this regard, the second time may not be equal to the time of the triggering event, but may be chosen to be slightly before the actual time of the triggering event. For example, although not illustrated in FIG. 5, rather than jumping directly to the time corresponding to the triggering event, the adaptive video streaming process 300 may be configured to display a segment and/or portion of the buffered video data stream that corresponds to a time a few seconds before the time of the triggering event (e.g., some time slightly prior the current time or mission time from FIG. 4). The adaptive video streaming process 300 may fast-forward through the buffered video data stream by displaying and/or rendering the entire contents of the buffered video data stream from the first time to the second time in the viewing area 402 on the display device 401 over a time period that is less than the difference between the second time and the first time. For example, in the exemplary case shown in FIG. 4 and FIG. 5, the adaptive video streaming process 300 may display and/or render almost four minutes of buffered video data, comprising the buffered video data stream between the first time (e.g., 6:22) and the second time (e.g., 10:03), in the viewing area 402 over a period of a couple seconds (e.g., approximately two or three seconds), as will be appreciated in the art. In this manner, the adaptive video streaming process 300 provides additional situational awareness and/or temporal awareness to a user by allowing the user to briefly view what occurred between the first time and the second time and better understand the real-time environment.

In another embodiment, the adaptive video streaming process 300 updates the viewing area 402 to display a second segment 500 of the buffered video data stream that not only corresponds to a time at or around the time of the triggering event, but also corresponds to the full frame of the buffered video data stream, such that the user does not miss a triggering event that may otherwise occur outside the field of view. For example, a user may manipulate the buffered video data stream and zoom in on a particular region, such that the first segment or portion of the buffered video data stream corresponds to a zoomed in area of the viewing region of the surveillance module 104. The adaptive video streaming process 300 updates the viewing area 402 by displaying and/or rendering the full frame segment of the buffered video data stream at or around the time of the triggering event, such that the user does not miss a triggering event that may have been outside of the user's field of view. Thus, even if the user is viewing the buffered video data stream in real-time, the user does not risk missing a potentially important event.

In an exemplary embodiment, the adaptive video streaming process 300 continues by indicating the triggering event on the display device (task 314). Depending on the embodiment, the adaptive video streaming process 300 may indicate the occurrence of a triggering event, and/or the type of triggering event. In accordance with one embodiment, the adaptive video streaming process 300 identifies or indicates a trigger event type associated with the triggering event in the viewing area 402 on the display device 401. For example, as shown in FIG. 5, if the trigger event type is object motion, the adaptive video streaming process 300 may indicate the trigger event type by displaying and/or rendering a textual indicator 520 indicating the type of triggering event that has occurred (e.g., 'Motion Detected'). In this manner, the user may readily determine the cause or rationale for updating the viewing area 402. Similarly, for other trigger event types (e.g., obstacle detection, an auditory event, light detection, and the like), the adaptive video streaming process 300 may textual indicator 520 may be modified accordingly to indicate the proper trigger event type, as will be understood. In some embodiments, the adaptive video streaming process 300 may also indicate the occurrence of a triggering event and/or the type oftriggering event by providing an auditory alert or message.

In accordance with one embodiment, if the triggering event is based on object motion, the adaptive video streaming process 300 indicates the triggering event on the display device 401 by identifying the object in the second segment 500 or portion of the buffered video data stream currently rendered and/or displayed in the viewing area 402. For example, as shown in FIG. 5, if the triggering event is identified by detecting motion of an object at the current time and/or mission time, the adaptive video streaming process 300 may indicate the object 530 responsible for generating the triggering event in the viewing area 402 on the display device 401. As shown, the adaptive video streaming process 300 may indicate and/or identify the object 530 by highlighting the object 530 using a graphical feature 532. For example, as shown in FIG. 5, the graphical feature 532 is realized as a circle surrounding the object 530, although in practice, the graphical feature 532 may be realized as another suitable geometric shape surrounding the object 530. In alternative embodiments, the graphical feature 532 may be realized as an arrow, a pointer, or another suitable symbol displayed proximate the object 530. Alternatively, instead of or in addition to highlighting the object 530 using a graphical feature 532, the adaptive video streaming process 300 may highlight or indicate the object 530 using a visually distinguishable characteristic. That is, the adaptive video streaming process 300 may render and/or display the object 530 using a visually distinguishable characteristic, such as, for example, a visually distinguishable color, hue, tint, brightness, graphically depicted texture or pattern, contrast, shading, outlining, transparency, opacity, and/or another suitable graphical effect (e.g., blinking, pulsing, or other animation). In another embodiment, the adaptive video streaming process 300 may identify the object by displaying a text-based indicator proximate the object. In yet another embodiment, the adaptive video streaming process 300 may identify the object by shading or dimming the video and/or viewing area except for a region or area surrounding the object. By graphically identifying the object, if the adaptive video streaming process 300 is adapted to display and/or render a segment of the buffered video data stream that corresponds to a time slightly prior to the time of the triggering event, the object 530 generating the triggering event and/or the area where the motion occurs may be identified prior to the movement is shown in the viewing area 402 on the display device 401.

In an exemplary embodiment, the adaptive video streaming process 300 is configured to allow a user to determine whether to ignore the triggering event (task 316). For example, a user may determine that the triggering event is unimportant, or otherwise less significant than the content being reviewed previously in the first segment of the buffered video data stream. In this regard, the adaptive video streaming process 300 may render and/or display a graphical tool 504 (e.g., a button) to allow a user to manually indicate the triggering event should be ignored. For example, the user may manipulate and/or position the user interface device 204 to select the return button 504, and in response, the processor 206 may receive an override signal indicating that the triggering event should be ignored. Alternatively, the user may position or manipulate the user interface device 204 to select the second indicator 508 on the progress bar 406 that indicates the previous view. In response to receiving an override signal or otherwise identifying or determining that the triggering event should be ignored, the adaptive video streaming process 300 restores the viewing area 402 based on the stored configuration information (task 318). For example, the adaptive video streaming process 300 may restore the viewing area 402 to the previous video time using the stored timestamp information such that the first segment 400 or portion of the buffered video data stream is displayed and/or rendered in the viewing area 402 on the display device 401. In an exemplary embodiment, although not illustrated, in addition to restoring the stored video time, the adaptive video streaming process 300 may also restore the view settings (e.g., resolution, zoom factor, etc.) based on the stored configuration information. The loop defined by tasks 302, 304, 306, 308, 310, 312, 314, 316 and 318 may repeat as desired.

To briefly summarize, the methods and systems described above allow a user to review and analyze a surveillance video data stream without being concerned with potentially missing significant real-time events. In the event of a real-time triggering event, the display is updated to show the surveillance video data stream substantially in real-time and the triggering event is identified on the display. The user can quickly ascertain the nature of the triggering event and proceed in an appropriate manner, or otherwise ignore the triggering event and return the previous view.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It being understood that various changes may be made in the function and arrangement of elements described in an exemplary embodiment without departing from the scope of the subject matter as set forth in the appended claims.

## Claims

1. A method for displaying streaming video on a display device (202, 401) of a control unit (200) associated with a surveillance module (104), the method comprising:
buffering a video data stream captured by the surveillance module (104) to obtain a buffered video data stream;
displaying a first segment (400) of the buffered video data stream in a viewing area (402) on the display device (202, 401), the first segment (400) corresponding to content captured at a first time in the past;
receiving a notification signal, the notification signal being indicative of a real time triggering event occurring at a second time and;
in response to the notification signal, displaying a second segment (500) of the buffered video data stream in the viewing area (402), the second segment (500) corresponding to content captured at or around the second time.

2. The method of claim 1, wherein displaying the second segment (500) of the buffered video data stream in the viewing area (402) comprises fast-forwarding through the buffered video data stream from the first time to the second time.

3. The method of claim 1, wherein displaying the second segment (500) of the buffered video data stream in the viewing area (402) comprises updating the buffered video data stream to the second time.

4. The method of claim 1, further comprising:
storing configuration information associated with the viewing area (402) at the first time, resulting in stored configuration information;
receiving, after the second time, an override signal; and
restoring the viewing area (402) to the first time based on the stored configuration information, wherein the first segment (400) of the buffered video data stream is displayed in the viewing area (402).

5. The method of claim 1, wherein the triggering event is generated in response to motion of an object (530) at the second time, and wherein the method further comprises identifying the object (530) in the second segment (500) of the buffered video data stream.

6. A control unit (200) for use with a surveillance module (104) adapted to capture a video data stream, the control unit (200) comprising:
a display device (202, 401);
a communication module (108) adapted to receive the video data stream; and
a processor (206) coupled to the display device (202, 401) and the communication module (108), wherein the processor (206) is configured to:
buffer the video data stream to obtain a buffered video data stream;
display a first segment (400) of the buffered video data stream on the display device (202,401), the first segment (400) corresponding to content captured at a first time, in the past
identify a real time triggering event occuring at a second time and
display a second segment (500) of the buffered video data stream on the display device (202, 401) in response to the triggering event, the second segment (500) corresponding to content captured at or around the second time.

7. The control unit (200) of claim 6, wherein the processor (206) is configured to identify the triggering event by detecting motion of an object (530) at the second time.

8. The control unit (200) of claim 6, wherein the processor (206) is configured to identify the triggering event by detecting motion of an object (530) in the second segment (500) of the buffered video data stream.

9. The control unit (200) of claim 7 or 8, wherein the processor (206) is configured to identify the object (530) in the second segment (500) of the buffered video data stream.

10. The control unit (200) of claim 6, wherein the processor (206) is configured to indicate a trigger event type (520) associated with the triggering event on the display device (202,401).

## Patentansprüche

1. Verfahren zum Anzeigen von Streaming-Video auf einer Anzeigeeinrichtung (202, 401) einer Steuereinheit (200), die mit einem Überwachungsmodul (104) assoziiert ist, wobei das Verfahren die folgenden Schritte umfasst:
Puffern eines durch das Überwachungsmodul (104) erfassten Videodatenstroms, um einen gepufferten Videodatenstrom zu erhalten;
Anzeigen eines ersten Segments (400) des gepufferten Videodatenstroms in einem Betrachtungsbereich (402) auf der Anzeigeeinrichtung (202, 401), wobei das erste Segment (400) zu einem ersten Zeitpunkt in der Vergangenheit erfasstem Inhalt entspricht;
Empfangen eines Benachrichtigungssignals, wobei das Benachrichtigungssignal ein Echtzeit-Auslösungsereignis, das an einem zweiten Zeitpunkt stattfindet, anzeigt, und
Anzeigen eines zweiten Segments (500) des gepufferten Videodatenstroms in dem Betrachtungsbereich (402) als Reaktion auf das Benachrichtigungssignal, wobei das zweite Segment (500) an dem zweiten Zeitpunkt oder um diesen herum erfasstem Inhalt entspricht.

2. Verfahren nach Anspruch 1, wobei das Anzeigen des zweiten Segments (500) des gepufferten Videodatenstroms in dem Betrachtungsbereich (402) ein Vorspulen durch den gepufferten Videodatenstrom von dem ersten Zeitpunkt zu dem zweiten Zeitpunkt umfasst.

3. Verfahren nach Anspruch 1, wobei das Anzeigen des zweiten Segments (500) des gepufferten Videodatenstroms in dem Betrachtungsbereich (402) das Aktualisieren des gepufferten Videodatenstroms auf den zweiten Zeitpunkt umfasst.

4. Verfahren nach Anspruch 1, ferner mit den folgenden Schritten:
Speichern von mit dem Betrachtungsbereich (402) an dem ersten Zeitpunkt assoziierten Konfigurationsinformationen, was zu gespeicherten Konfigurationsinformationen führt;
Empfangen eines Übersteuerungssignals nach dem zweiten Zeitpunkt; und
Zurückführen des Betrachtungsbereichs (402) zu dem ersten Zeitpunkt auf der Basis der gespeicherten Konfigurationsinformationen, wobei das erste Segment (400) des gepufferten Videodatenstroms in dem Betrachtungsbereich (402) angezeigt wird.

5. Verfahren nach Anspruch 1, wobei das Auslösungsereignis als Reaktion auf Bewegung eines Objekts (530) an dem zweiten Zeitpunkt erzeugt wird und wobei das Verfahren ferner das Identifizieren des Objekts (530) in dem zweiten Segment (500) des gepufferten Videodatenstroms umfasst.

6. Steuereinheit (200) zur Verwendung mit einem Überwachungsmodul (104), das dafür ausgelegt ist, einen Videodatenstrom zu erfassen, wobei die Steuereinheit (200) Folgendes umfasst:
eine Anzeigeeinrichtung (202, 401);
ein Kommunikationsmodul (108), das dafür ausgelegt ist, den Videodatenstrom zu empfangen; und
einen mit der Anzeigeeinrichtung (202, 401) und dem Kommunikationsmodul (108) gekoppelten Prozessor (206), wobei der Prozessor (206) für Folgendes ausgelegt ist:
Puffern des Videodatenstroms, um einen gepufferten Videodatenstrom zu erhalten;
Anzeigen eines ersten Segments (400) des gepufferten Videodatenstroms auf der Anzeigeeinrichtung (202, 401), wobei das erste Segment (400) zu einem ersten Zeitpunkt in der Vergangenheit erfasstem Inhalt entspricht;
Identifizieren eines Echtzeit-Auslösungsereignisses, das an einem zweiten Zeitpunkt stattfindet, und
Anzeigen eines zweiten Segments (500) des gepufferten Videodatenstroms auf der Anzeigeeinrichtung (202, 401) als Reaktion auf das Auslösungsereignis, wobei das zweite Segment (500) an dem zweiten Zeitpunkt oder um diesen herum erfasstem Inhalt entspricht.

7. Steuereinheit (200) nach Anspruch 6, wobei der Prozessor (206) dafür ausgelegt ist, das Auslösungsereignis durch Detektieren von Bewegung eines Objekts (530) an dem zweiten Zeitpunkt zu identifizieren.

8. Steuereinheit (200) nach Anspruch 6, wobei der Prozessor (206) dafür ausgelegt ist, das Auslösungsereignis durch Detektieren von Bewegung eines Objekts (530) in dem zweiten Segment (500) des gepufferten Videodatenstroms zu identifizieren.

9. Steuereinheit (200) nach Anspruch 7 oder 8, wobei der Prozessor (206) dafür ausgelegt ist, das Objekt (530) in dem zweiten Segment (500) des gepufferten Videodatenstroms zu identifizieren.

10. Steuereinheit (200) nach Anspruch 6, wobei der Prozessor (206) dafür ausgelegt ist, einen mit dem Auslösungsereignis assoziierten Auslösungsereignistyp (520) auf der Anzeigeeinrichtung (202, 401) anzugeben.

## Revendications

1. Procédé permettant d'afficher une vidéo en diffusion continue sur un dispositif d'affichage (202, 401) appartenant à une unité de commande (200) associée à un module de surveillance (104), le procédé comprenant :
la mise en tampon de flux de données vidéo capturé par le module de surveillance (104) afin d'obtenir un flux de données vidéo mises en tampon,
l'affichage d'un premier segment (400) du flux de données vidéos mises en tampon dans une zone de visualisation (402) sur le dispositif d'affichage (202, 401), le premier segment (400) correspondant au contenu capturé à un premier instant dans le passé,
la réception d'un signal de notification, le signal de notification indiquant un événement déclenchant en temps réel se produisant à un second instant, et
en réponse au signal de notification, l'affichage d'un second segment (500) du flux de données vidéo mises en tampon dans la zone de visualisation (402), le second segment (500) correspondant au contenu capturé environ au second instant.

2. Procédé selon la revendication 1, dans lequel l'affichage du second segment (500) du flux de données vidéo mises en tampon dans la zone de visualisation (402) comprend une avance rapide au travers du flux de données vidéo mises en tampon depuis le premier instant jusqu'au second instant.

3. Procédé selon la revendication 1, dans lequel l'affichage du second segment (500) du flux de données vidéo mises en tampon dans la zone de visualisation (402) comprend la mise à jour du flux de données vidéo mises en tampon jusqu'au second instant.

4. Procédé selon la revendication 1, comprenant en outre :
la mémorisation d'informations de configuration associées à la zone de visualisation (402) au premier instant, ce qui résulte en des informations de configuration mémorisées,
la réception, après le second instant, d'un signal de commande prioritaire, et
la restauration de la zone de visualisation (402) au premier instant sur la base des informations de configuration mémorisées, le premier segment (400) du flux de données vidéo mises en tampon étant affiché dans la zone de visualisation (402).

5. Procédé selon la revendication 1, dans lequel l'événement déclenchant est généré en réponse au mouvement d'un objet (530) au second instant et dans lequel le procédé comprend en outre l'identification de l'objet (530) dans le second segment (500) du flux de données vidéo mises en tampon.

6. Unité de commande (200) destinée à être utilisée avec un module de surveillance (104) conçu pour capturer un flux de données vidéo, l'unité de commande (200) comprenant :
un dispositif d'affichage (202, 401),
un module de communication (108) conçu pour recevoir le flux de données vidéo, et
un processeur (206), couplé au dispositif d'affichage (202, 401) et au module de communication (108), dans lequel le processeur (206) est configuré pour :
mettre en tampon le flux de données vidéo afin d'obtenir un flux de données vidéo mises en tampon,
afficher un premier segment (400) du flux de données vidéo mises en tampon sur le dispositif d'affichage (202, 401), le premier segment (400) correspondant au contenu capturé à un premier instant dans le passé,
identifier un élément déclenchant en temps réel se produisant à un second instant, et
afficher un second segment (500) du flux de données vidéo mises en tampon sur le dispositif d'affichage (202, 401) en réponse à l'élément déclenchant, le second segment (500) correspondant au contenu capturé environ au second instant.

7. Unité de commande (200) selon la revendication 6, dans laquelle le processeur (206) est configuré pour identifier l'événement déclenchant en détectant le mouvement d'un objet (530) au second instant.

8. Unité de commande (200) selon la revendication 6, dans laquelle le processeur (206) est configuré pour identifier l'événement déclenchant en détectant le mouvement d'un objet (530) dans le second segment (500) du flux de données vidéo mises en tampon.

9. Unité de commande (200) selon la revendication 7 ou 8, dans laquelle le processeur (206) est configuré pour identifier l'objet (530) dans le second segment (500) du flux de données vidéo mises en tampon.

10. Unité de commande (200) selon la revendication 6, dans laquelle le processeur (206) est configuré pour indiquer un type d'événement de déclenchement (520) associé à l'événement déclenchant sur le dispositif d'affichage (202, 401).
